# EUROPEAN PATENT APPLICATION

(11) **EP 0 593 840 A1**
(43) Date of publication of application: **27.04.1994**
(21) Application number: 92870173.9
(22) Date of filing: 23.10.1992
(51) Int. Cl.: C08J 9/26, B65D 39/00

(54) **Process for making thermoplastic materials comprising a network of microchannels**

(71) Applicant: THE PROCTER & GAMBLE COMPANY, Cincinnati, Ohio 45202 (US)
(72) Inventor: Apicella, Antonio, Napoli (IT); Marino, Giuliano, Napoli (IT); Loffredo, Arturo, Grottaferrata (Roma) (IT); Nicolais, Luigi, Napoli (IT); Mancuso, Giancarlo, Casteldaccia (Palermo) (IT)
(74) Representative: Canonici, Jean-Jacques

(57) **Abstract**

The present invention relates to a process for making a thermoplastic material which comprises a network of microchannels and is therefore permeable to gases but not to liquids. The present invention also relates to the materials thus produced, which can be used for the manufacture of various articles, particularly containers for containing liquids which generate pressure.

## Description

### Technical field

The present invention relates to a process for making a thermoplastic material comprising a network of microchannels and which is permeable to gases but not to liquids. The material thus produced can be used for making articles, in particular containers or parts thereof for containing liquids which generate pressure.

### Background of the invention

Containers made of plastic materials have been extensively described in the art as well as their numerous possible applications. In particular, many inventions have been made relating to plastic containers for containing liquids which generate pressure. Indeed, specific problems are associated with such liquids, in that the pressure which builds up inside a closed container containing such a liquid may raise safety issues, or lead to the deformation of the container.

In the art, solutions to this problem have been proposed, for instance by designing containers of specific shapes, whereby the container has optimal resistance to deformation. This type of solution has the drawback that it limits the flexibility in designing such containers. Other solutions relate to various venting caps for such containers, which allow the gas generated inside the container to escape outside the container. This type of solution has the drawback that such venting caps are usually quite complex and involve expensive manufacturing.

It has now been found that the above problems could be obviated by using containers or parts thereof made partly or totally of a plastic material which is impermeable to liquids, but permeable to gases. In such containers, it is the plastic material itself which regulates the pressure inside the container so as to reach an equilibrium with the ambient.

Various processes have been described in the art for the manufacture of semi-permeable membranes, some of which are made out of a thermoplastic material. In particular, US 4,100,238, discloses the preparation of semi-permeable membranes from a molten mixture of a stretchable thermoplastic material and at least one other material selected from polymers or oligomers with at least 20 carbon atoms, fatty acids with at least 16 carbon atoms, or salts or esters of said fatty acids. The mixture is then converted into a film, foil or hollow body, and is then treated with a solvent which is good for said other material but not for said thermoplastic material. The product is dried and then finally stretched. The process in the '238 patent cannot be applied to the manufacture of parts with complex shapes such as containers or parts thereof as said parts cannot be stretched.

### Summary of the invention

The present invention encompasses a process for the manufacture of a thermoplastic material comprising a network of microchannels, said process comprising the steps of:
a)-mixing a thermoplastic material in a liquid form with a preformed additive, said preformed additive comprising a carrier compound which is insoluble in said thermoplastic material and soluble in water, and a ionic compound which is at least partially soluble in said carrier compound and which is more soluble in water than said carrier compound;
b)-solidifying the mixture obtained in a);
c)-Treating said solidified mixture obtained in b) with water so as to extract said carrier compound and said ionic compound from said solidified mixture.

Upon extraction of said carrier compound and said ionic compound, micro channels are formed in said thermoplastic material which are small enough to allow gases to pass but not liquids.

The present invention also encompasses the thermoplastic materials obtained by said process which comprise a network of microchannels and are permeable to gases but not to liquids, as well as the intermediary materials obtained in steps a) and b). The present invention further encompasses articles made out of said materials or intermediary materials, such as containers or parts thereof.

### Detailed description of the invention

The present invention first encompasses a process for the manufacture of a thermoplastic material comprising a network of microchannels which is permeable to gases but impermeable to liquids. Said process comprises at least three steps.

### Step a)

In the first step of the process according to the present invention, a thermoplastic material in a liquid form is mixed with a preformed additive. Said preformed additive comprises a carrier compound which is insoluble in said thermoplastic material and soluble in water, and a ionic compound which is at least partially soluble in said carrier compound and which is more soluble in water than said carrier compound.

Any thermoplastic material known to the man skilled in the art can be used for the purpose of the present invention . The selection of the appropriate thermoplastic material depends essentially on the desired characteristics for the end-use envisioned. Suitable thermoplastic materials for use herein include high-density and low-density polyethylene, linear polyethylene, polyethylene terephthalate, polypropylene, polystyrene, and the like.

Said thermoplastic material needs to be in a liquid state for the purpose of an efficient mixing with the preformed additive described hereinafter. The liquefaction of said thermoplastic material can be carried out by any of the many processes available to the man skilled in the art for this purpose. For instance, the thermoplastic material can be melted, or it can be dissolved in an appropriate solvent which will later be evaporated in step b) hereinafter.

To this liquid thermoplastic material is added a preformed additive. Said preformed additive comprises a carrier compound which is insoluble in said thermoplastic material and soluble in water, and a ionic compound which is at least partially soluble in said carrier compound and which is more soluble in water than said carrier compound. The thermoplastic material and the preformed additive are mixed together so as to form a blend comprising a homogeneous distribution of said three ingredients.

The preformed additive is one of the essential means by which micro channels will be formed in the thermoplastic material as said carrier and ionic compounds are extracted from said thermoplastic material in step c) hereinafter.

The ionic compound for use herein is chosen because of its high solubility in water and its solubility, at least partial, in the carrier compound. When the thermoplastic material containing the additive is treated with water in step c) hereinafter, said ionic compound will easily and quickly be extracted from the thermoplastic material, thereby creating a microchannel network. Appropriate ionic compounds for use herein include organic or inorganic salts of low molecular weight, and preferred are inorganic salts. Particularly preferred for use herein is NaCl. Said preformed additive may comprise from 20 % to 80 % by weight of said additive of said water-soluble inorganic salt, preferably from 40 % to 60 %.

The carrier compound used in said preformed additive has a dual function. First, it will "carry" said ionic compound intimately and homogeneously into the liquid thermoplastic material. Indeed, said ionic compound is highly water-soluble and therefore it cannot be homogeneously distributed throughout the thermoplastic material which constitutes a hydrophobic environment. The carrier polymer is less water-soluble than the ionic compound and can therefore be more easily mixed into the hydrophobic environment constituted by the thermoplastic material. Accordingly, said carrier polymer acts as a vehicle for said ionic compound which is partially dissolved in said carrier polymer, thereby helping to obtain a homogeneous distribution of the ionic compound in the thermoplastic material. A homogeneous distribution of the ionic and carrier compounds in the thermoplastic material is essential in order to obtain an appropriate network of microchannels.

The second function of the carrier compound is to act as a "brake" as the ionic compound and the carrier compound itself are extracted from the thermoplastic material upon treatment with water in step c) hereinafter. Indeed, apart from the fact that the ionic compound could not be homogeneously distributed in the thermoplastic material, experiments tried without a carrier compound have evidenced a phenomenon whereby the thermoplastic material simply cracked upon treatment with water in step c) hereinafter. It is speculated that this phenomenon was caused by an uncontrolled and very rapid extraction of the ionic compound which caused mechanical stress in the thermoplastic material. Said carrier compound, because it is less water-soluble than said ionic compound, plays a role in controlling the extraction of said ionic compound. Suitable carrier compounds for use herein include polyethylene glycol, polyethylene oxide, polyvinyl alcohol, polyarylamide, polyacrylamide, polyacrylic acid and polyvinylpyrrolidone. Particularly preferred for use herein when NaCl is used as ionic compound is polyethylene glycol.

The proportion of said carrier compound in said preformed additive must be such as to ensure that said ionic compound will be homogeneously distributed in said liquid thermoplastic material. Accordingly, said preformed mixture will comprise from 20 % to 80 % by weight of said preformed additive of said carrier compound, preferably from 40 % to 60 %.

The ionic compound and the carrier compound are mixed together before they are added to the liquid thermoplastic material in order to constitute the preformed additive herein. There are no restrictions as to how said ingredients must be mixed, but it has proven particularly efficient to add the carrier compound in a saturated aqueous solution of the ionic compound, while stirring and gently heating.

Said preformed additive is then mixed with said liquid thermoplastic material. Said preformed additive can be provided either as a liquid or pasty material, but it can also be provided in a dry form. It has proven particularly efficient to add said preformed additive to said liquid thermoplastic material as a fine powder.

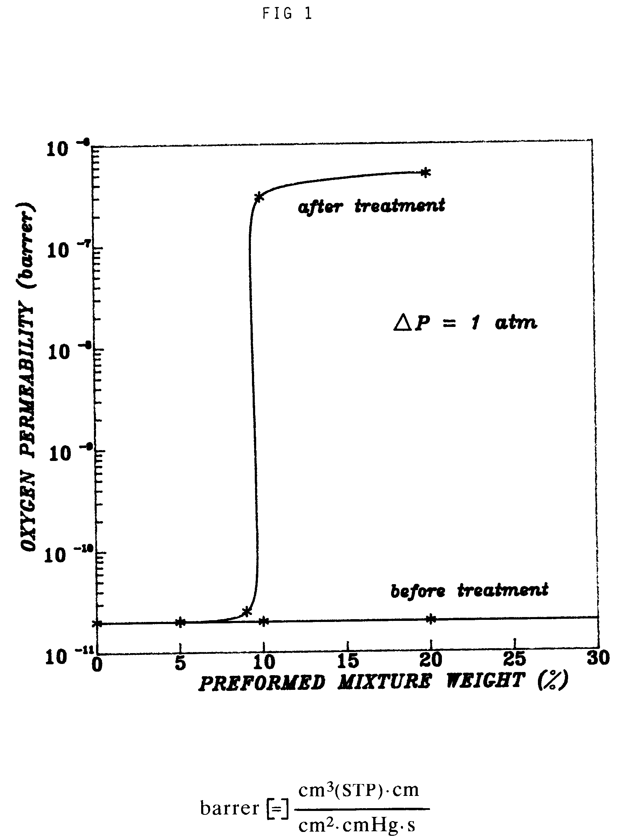

The proportion of preformed additive to thermoplastic material may vary within a wide range. As the proportion of preformed additive increases the microchannel network becomes denser and therefore the permeability to gases of the thermoplastic material increases. The graph in Fig. 1 hereinafter plots the permeability of the thermoplastic material in the example hereinafter against the proportion of preformed additive. In general, the preformed additive should be added in an amount of from 5% to 50% by weight, preferably 40%, of the mixture (i.e. the thermoplastic material + the preformed additive). The end result of this step a) is a liquid blend comprising a homogeneous distribution of said thermoplastic material, said ionic material and said carrier material.

### Step b)

In the second step of the process according to the present invention, said blend obtained in step a) is solidified.

The process to be used to solidify said blend depends on the process which was used to liquefy the thermoplastic material in a liquid form in step a). For instance, if the thermoplastic material was melted in step a), then all that is needed is to leave said blend to cool down. Alternatively, if the thermoplastic material was dissolved in a solvent, then appropriate steps need to be taken so as to ensure evaporation of the solvent from said blend. The result of step b) in the process according to the present invention is a solid mass comprising a homogeneous distribution of said thermoplastic material, said carrier compound and said ionic compound.

### Step c)

In the third step in the process according to the present invention, said solid mass obtained in step b) herein above is treated with water so as to extract the ionic compound and the carrier compound from said solid mass, thereby creating a network of microchannels.

The optimal conditions under which this extraction step is to be carried out depend on such variables as the exact composition of the solid mass obtained in step b), as well as the shape and dimension of said solid mass. These conditions can be adjusted by simple experimentation. A particularly effective extraction has been observed when said solid mass is immersed in water at about 100°c for several hours.

The material obtained by said process can be used as a raw material for the manufacture of various articles, in particular containers or parts thereof for containing liquids which generate pressure. However, the material obtained by said process cannot be subjected to such treatments as melting as this would destroy the microchannels formed during the process. Accordingly, the material produced by the process can only be used as raw material provided that the transformation of the raw material into the desired article involves no alteration of the microchannel network.

In a highly preferred embodiment, the three steps process described hereinabove includes appropriate additional steps for the manufacture of said articles. In a highly preferred embodiment, the process described hereinabove comprises at least one additional step where the blend or mass obtained in step a) or b) is shaped to the desired shape of the article to be manufactured before it is treated according to step c) hereinabove. Thus, the article is first formed into its desired final shape, and in a last step the ionic compound and the carrier compound are extracted. In this embodiment, because the article is formed before the micro channels are actually formed, any technique can be used to form the blend or mass into the desired form; typically the article is formed by molding.

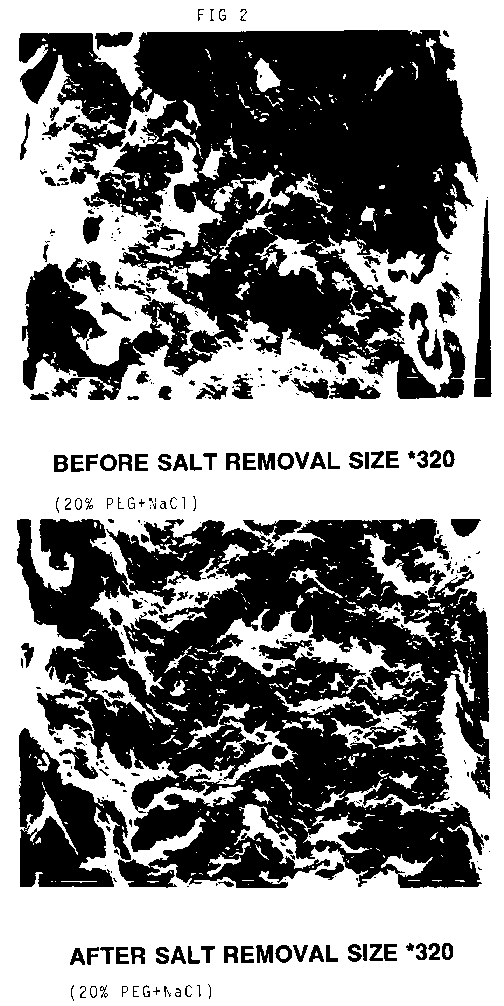

The present invention also encompasses the thermoplastic material formed by said process which is impermeable to liquid but permeable to gases. Fig 2 hereinafter shows microscope pictures of a material according to the present invention, before and after the salt extraction. The final material comprises said thermoplastic material. Depending on the efficacy of the extraction step c), part of the carrier compound may be left in the final thermoplastic material. Said final thermoplastic material comprises a network of micro channels which were created in the extraction step. Said network of micro channels allows gases to pass, but not liquids.

The present invention also encompasses articles made out of said thermoplastic material or intermediary materials, such as containers or parts thereof. Said containers, or parts thereof are particularly suitable for containing liquids which generate pressure inside a closed container, such as bleach-containing compositions. The whole of said container can be made out of said material obtained by the process according to the present invention, or part thereof. As an alternative, it may be appropriate to use containers where only the cap or a part thereof is made out of said material obtained according to the present invention.

The present invention will be further illustrated by the following example.

### Example

A preformed mixture was prepared by dissolving polyethylene glycol in a saturated aqueous solution of NaCl at a temperature of about 30°c. After an hour, a gelatinous mixture was obtained. Said mixture was then dried in an oven at about 110°c so as to obtain a powder. Said powder contained about 50% of polyethylene glycol and 50% of NaCl.

Said preformed mixture was then added to molten polypropylene in a static mixer for about 10 min at about 30 RPM and about 180°c so as to obtain a homogeneous mass. Different materials were prepared by using different proportions of preformed mixture (5%, 10%, 20%, 30% and 40% by weight of said homogeneous mass comprising the polypropylene and preformed mixture).

The resulting homogeneous masses were then extracted and slowly cooled. They were then granulated by a ball mill to obtain fine powders. Said fine powders were used to make disk-shaped parts of about 35mm in diameter and about 0.4mm in thickness by compression molding using a mechanical press.

After quenching, the disks were immersed in boiling distilled water for about 4 hours so as to extract the NaCl from the disks.

Permeability tests were performed on these disks by using a system consisting of a chamber into which the sample was mounted so as to separate said chamber in two distinct and isolated chambers. One of the volumes obtained was emptied by a vacuum pump. A constant gas flow (O₂) was supplied in the other volume. The pressure in the volume initally emptied was then monitored by a transducer, so as to evaluate the permeability of the disk. The results obtained were plotted on a curve (Fig.1).

## Claims

1. A process for the manufacture of a thermoplastic material comprising a network of microchannels, said process comprising the steps of:
a)-mixing a thermoplastic material in a liquid form with a preformed additive, said preformed additive comprising a carrier compound which is insoluble in said thermoplastic material and soluble in water, and a ionic compound which is at least partially soluble in said carrier compound and which is more soluble in water than said carrier compound;
b)-solidifying the mixture obtained in a);
c)-Treating said solidified mixture obtained in b) with water so as to extract said carrier compound and said ionic compound from said solidified mixture.

2. A process according to claim 1 for the manufacture of an article, which comprises at least one additional step where said blend or mass obtained in step a) or b) is shaped to the desired shape of said article to be manufactured before it is treated according to step c).

3. A thermoplastic material obtainable in step a) in the process according to claims 1 or 2, which is a liquid blend comprising a homogeneous distribution of said thermoplastic material, said ionic compound and said carrier compound.

4. A thermoplastic material obtainable in step b) in the process according to claims 1 or 2, which is a is a solid mass comprising a homogeneous distribution of said thermoplastic material, said ionic compound and said carrier compound.

5. A thermoplastic material obtainable by the process according to claims 1 or 2 which comprises said thermoplastic material and a network of microchannels, whereby said material is permeable to gases but not liquids.

6. An article made out of a material according to any of the claims 3-5.

7. An article according to claim 6 which is a container for containing liquids, or a part thereof.

8. An article according to claim 7 which is a cap or a part thereof for a container.

9. A process according to claims 1 or 2, a thermoplastic material according to claims 3-5, an article according to claims 6-8, whereby said ionic compound is an inorganic salt of low molecular weight, preferably NaCl, and said carrier compound is polyethylene glycol.
